# EUROPEAN PATENT APPLICATION

(11) **EP 1 923 264 A2**
(43) Date of publication of application: **21.05.2008**
(21) Application number: 07380312.4
(22) Date of filing: 12.11.2007
(51) Int. Cl.: B60Q 1/26, B60Q 1/30

(54) **Outside luminous indicator for automotive vehicles**

(30) Priority: 16.11.2006 ES 200602480 U
(71) Applicant: Seat, S.A., 08760 Martorell - Barcelona (ES)
(72) Inventor: Berni Millet, Santiago c/o Seat S.A., 08760 Martorell - Barcelona (ES); Torres Sanchez, Roberto c/o Seat S.A., 08760 Martorell - Barcelona (ES); Murcia Serra, Sergio c/o Seat S.A., 08760 Martorell - Barcelona (ES)
(74) Representative: Carvajal y Urquijo, Isabel

(57) **Abstract**

The invention relates to an outside luminous indicator (2) for automotive vehicles, intended for an opening of the bodywork panel (1), having a casing (3) housing a light source visible through a lens (5), a tongue (8) which bends transversely axially projecting from the wall (7) of the casing (3), on which tongue (8) a wall portion of the lens (5) internally abuts. The tongue (8) has a flange (10) towards the wall of the lens (5) and a window (11) outside of said flange (10), close to the free edge, and the lens (5) has two windows (12,13) and a flange (14), the windows (12,13) of the lens being selective opposite to the flange (10) of the tongue (8), and the flange (14) of the lens (5) opposite to the window (11) of the tongue (8) in the partial coupling position between lens (5) and casing (3), whereas in the total coupling position the tongue (8) of the wall (7) of the casing (3) rests on the flange (14) of the lens (5), being partially flexed outwardly and operating as a retaining stop against the edge of the opening of the bodywork panel (1).

## Description

### Field of the Invention

The present invention relates to an outside luminous indicator for automotive vehicles, especially conceived as an outside luminous indicator for a third brake light.

The luminous indicator of the invention is intended to be assembled in an opening of the bodywork panel made for example in the panel of the rear hatch of a vehicle, and it is of the type formed by a casing, by way of a box open at one of its bases and located inside the bodywork panel or hatch, and by a lens fixed to the casing, closing its open base and the opening of the bodywork. A connecting strip is arranged in the casing which supports the visible light source through the lens.

### Background of the Invention

Traditional luminous indicators of the type indicated require a series of pre-assembly operations, both inside the bodywork or hatch, through a suitable frame, and outside. Special tools are furthermore necessary for attaining the coupling and final fixing of the indicator.

The need to carry out an assembly both from outside and from inside represents certain complexity in its installation for the operator in the assembly line, especially in relation to the assembly from the inside. This fact combined with the need to use fixing tools, implies greater assembly time with all that this entails.

In addition, current indicators are assembled in an area that must have a required minimum inclination. This is because the assembly of the indictor requires a position and introduction through the corresponding opening with a different inclination than the one of the area in which it is assembled, and a partial final turn to attain its perfect adaptation on the surface of the area.

### Description of the Invention

The object of the present invention is to eliminate the problems set forth by means of a luminous indicator formed such that its assembly can be carried out completely from outside the bodywork or hatch and by means of a single coupling operation. The number of operations to be performed is thus reduced, with the subsequent cost savings both in materials, as special tools are not necessary, and in assembly times. In the same manner, the disassembly thereof is also aided since it can be carried out from inside or outside the automobile by means of two or three operations, respectively.

The indicator of the invention can be assembled on areas of the bodywork that do not require a minimum inclination, and the assembly position corresponds with the final position of the indicator.

The advantages set forth are achieved with the indicator of the invention as a result of its fixing system by means of a small flexor located on the upper part of the lens, causing the bending of a tongue of the casing, aiding its assembly in the rear hatch. This assembly is carried out by simply placing the indicator in the opening of the bodywork or hatch and exerting the required pressure on the lens-casing assembly such that the fastening points which are supported inside the bodywork panel or hatch are introduced. A series of locking points and a gasket in turn assure the correct positioning and fastening of the indicator.

According to the present invention, the wall of the casing extends axially, in the upper part of the indicator, into at least one tongue that can bend transversely, on which tongue portions of the wall of the lens are internally abutted.

The mentioned tongue has a flange aimed towards the wall of the lens, as well as a window located outside the mentioned flange, close to the free edge thereof.

For its part, the lens has in the wall portion opposite to the tongue of the casing two windows having a dimensions that are greater than the flange of the tongue, these windows being axially separated from one another and positioned such that they are selectively opposite to the flange of the tongue in the complete and partial coupling of the lens in the casing. The lens further has a flange which is located outside the two previously mentioned windows which has smaller dimensions than the window of the tongue of the wall of the casing, the flange being opposite to the window in the partial coupling position between lens and casing.

The tongue of the wall of the casing in the complete coupling position rests on the flange of the lens and is partially bent outwardly, thus defining a retaining stop against the edge of the opening of the bodywork panel when the indicator is completely coupled in the opening.

To achieve a perfect closure a gasket is arranged between the edge of the opening of the bodywork panel and the lens, which gasket is retained by the edge of the tongue of the wall of the casing in the maximum coupling position between lens and casing.

### Brief Description of the Drawings

The indicator of the invention is explained in greater detail below with the aid of the attached drawings which show a non-limiting embodiment and in which:
Figures 1 to 3 shows sectional and schematic views of the assembly system of traditional indicators.
Figure 4 shows a rear elevational view of an automotive vehicle with a rear hatch in which the indicator of the invention is assembled.
Figures 5, 6, 7 and 8 show partial cross-sectional views taken along section line II-II of Figure 4, successive assembly steps of the indicator of the invention.
Figure 9 shows an inner perspective view of the assembled indicator corresponding to the position of Figure 8.
Figures 10 and 11 also show partial cross-sectional views of relative positions between the lens and the casing during the disassembly of the indicator from inside the invention and from the assembled position of Figure 8.
Figure 12 shows an inner perspective view of the indicator in the initial disassembly position corresponding with the position of Figure 10.
Figures 13 to 15 also show partial cross-sectional views of successive positions between the lens and the casing, representing the disassembly of the indicator from outside, from the position shown in Figure 8.

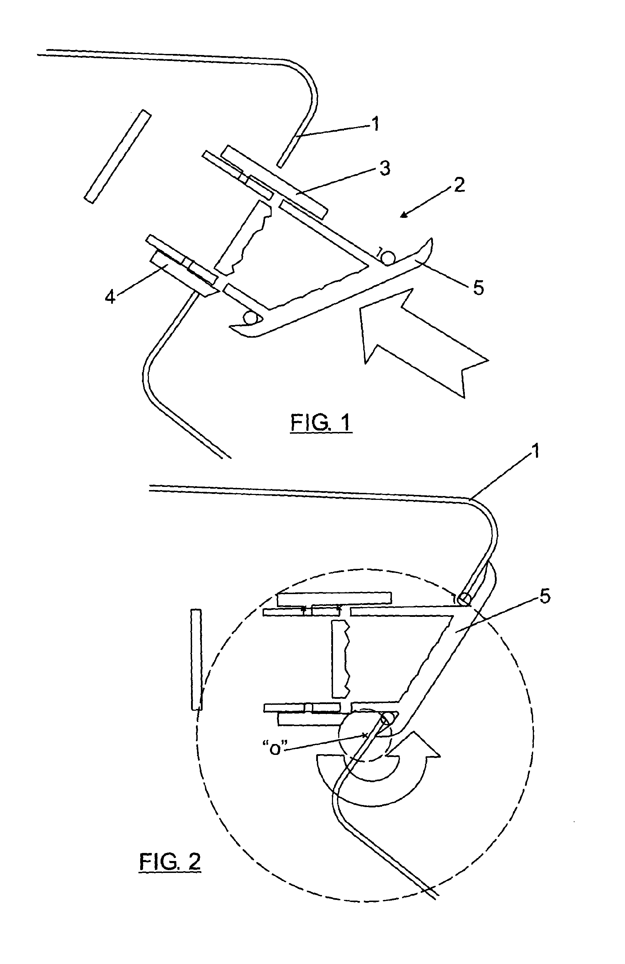

Figures 1 to 3 show three successive steps of a traditional indicator.

Figure 1 shows how the assembly of the luminous indicator 2, formed by the casing 3 and the lens 5, from outside begins through the opening made in the panel 1 of the rear hatch of a vehicle.

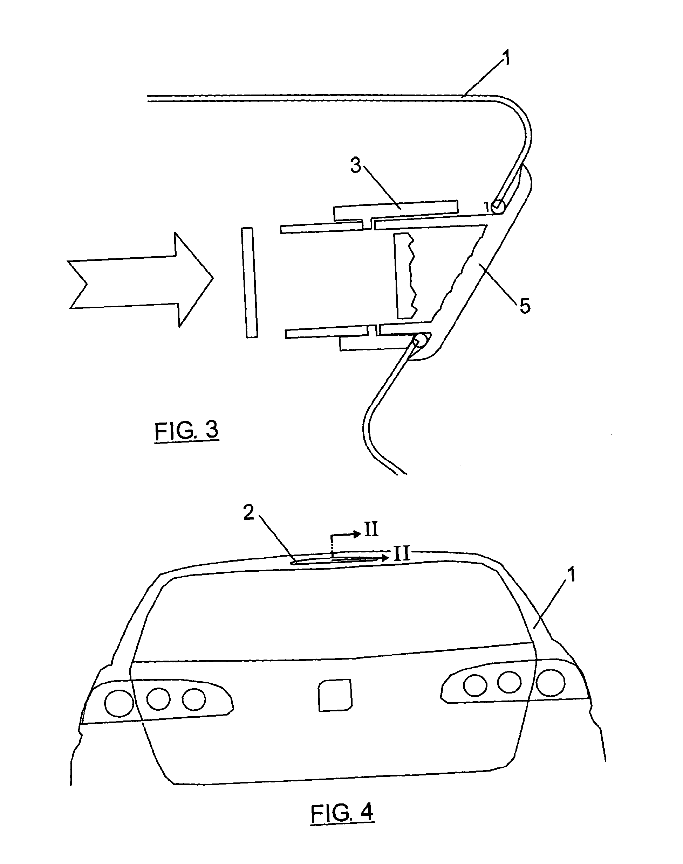

The lens 5 is positioned with an inclination exceeding that of the panel 1. Figure 2 shows how it is necessary to turn the lens around point "0", as indicated with the arrow, once the assembly is introduced until attaining the perfect coupling of the lens 5 to the panel 1. Finally, as is shown in Figure 3, the assembly must be fixed from inside with a suitable tool.

Figure 4 shows the rear part of a vehicle with a rear hatch in which an outside luminous indicator 2 for a third brake light is assembled in an opening made in the panel 1 of the bodywork.

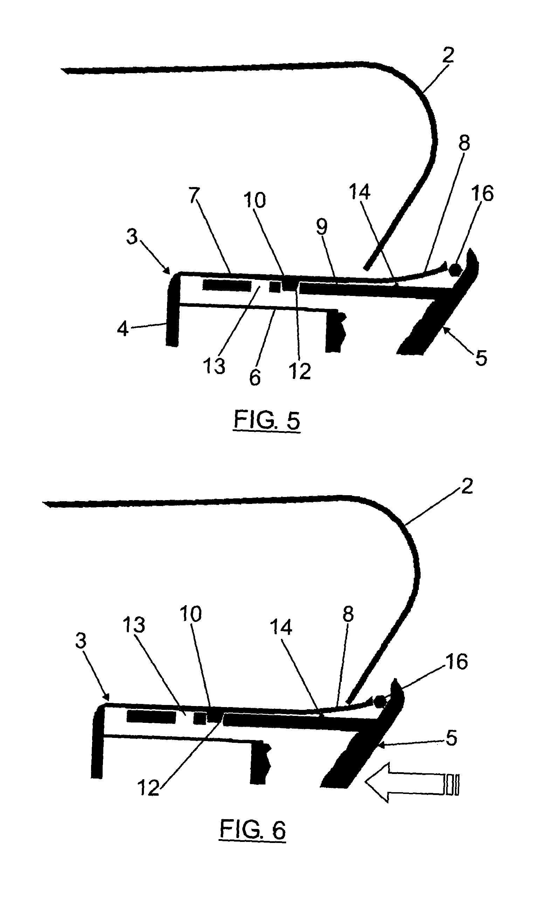

As can be seen in Figure 5, the indicator, shown in the disassembled position, is formed by a casing 3, by way of a box, closed at one of its bases 4 and open at the opposite base, which is closed by a lens 5. Assembled inside the casing 4 there is a connecting strip 6 supporting the light source that will be visible through the lens 5.

The wall 7 of the casing 3 extends axially in its upper part into a tongue 8 that can bend transversely, on which tongue a portion of the wall 9 of the lens 5 is internally abutted.

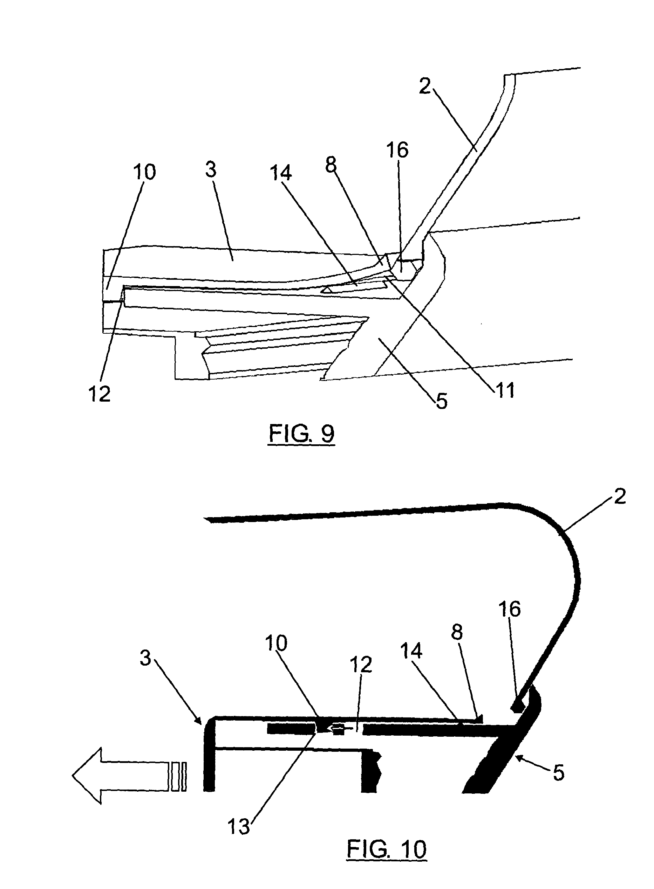

Along the surface aimed towards the wall 9 of the lens, the tongue 8 has a flange 10 and a window 11, Figure 9, which is located outside the flange 10, close to the free edge of said tongue.

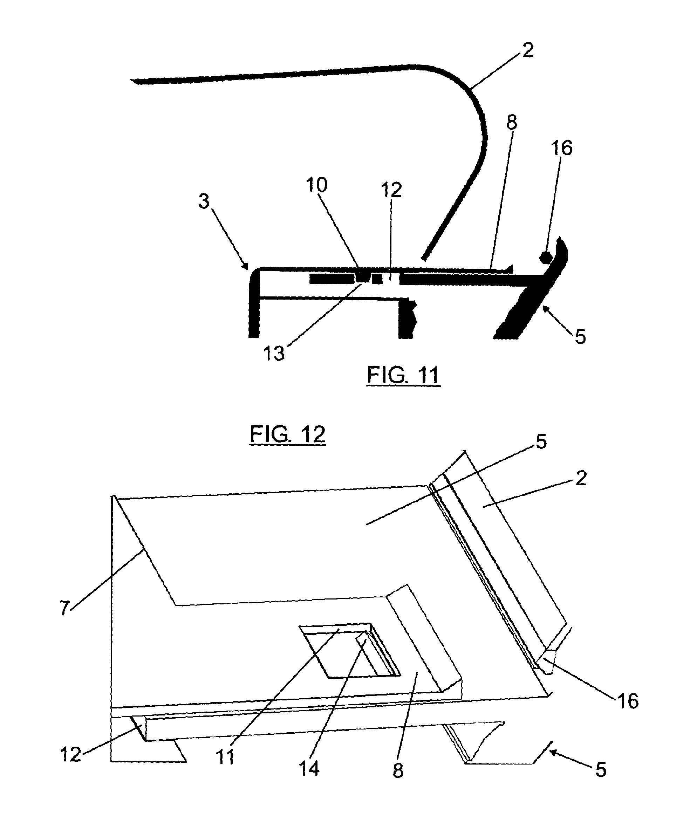

For its part, the lens has in the wall portion 9 opposite to the tongue 8 of the casing, two windows 12 and 13 having dimensions that are greater than the flange 10 of the tongue and which are axially separated from one another. This lens further has a flange 14, aimed towards the tongue 8, which is located outside the two windows 12 and 13 and which has smaller dimensions than the window 11 of the tongue 8, as can be seen in Figure 12.

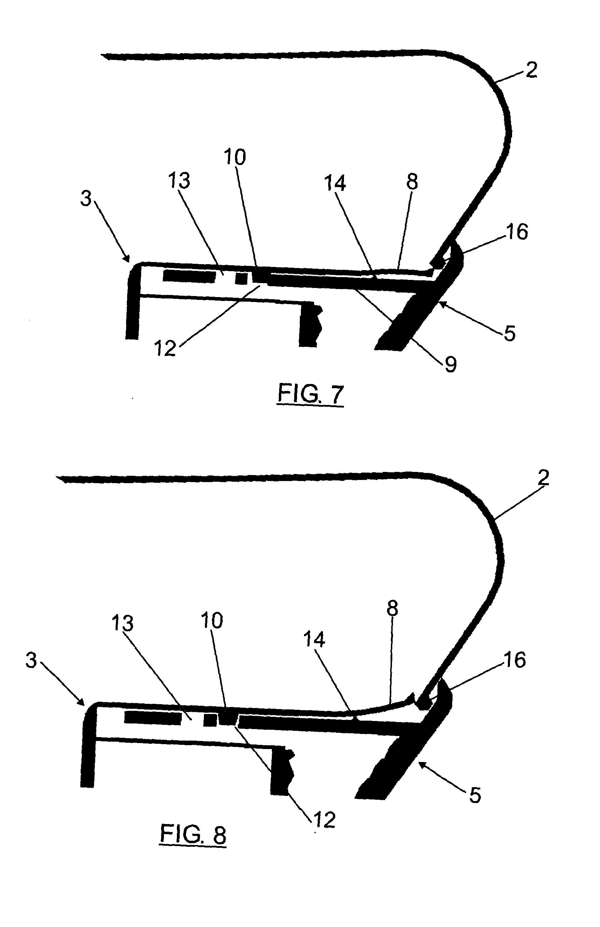

Figures 5 to 9 show successive assembly steps of the lens. In Figure 5, with the lens 5 coupled in the casing 3, the flange 10 of the tongue 8 is housed in the window 12 of the wall of the lens. For its part, the tongue 8 is partially bent outwardly upon resting in the flange 14 of the wall 9 of the lens 5. In this situation, it can be seen in Figure 5 how the lens 5 is to be introduced by means of applying external pressure. In this first step, as indicated the flange 10 is inserted in the window 12 and the tongue 8 is partially bent outwardly. When the tongue 8 comes into contact with the panel 1 of the casing, the tongue 8 elastically bends. In the second step shown in Figure 6, the external pressure in the direction of the arrow continues inserting the lens 5. As it is introduced, the tongue 8 bends more and more upon coming into contact with the edge of the opening of the panel 1. Figure 7 shows the complete insertion of the lens 5, together with the complete bending of the tongue 8 in the opposite direction caused by the contact of said tongue with the edge of the opening of the panel 1. Finally, Figure 8 shows how the tongue 8 recovers its initial outwardly bent position when it is no longer in contact with the edge of the opening of the panel 1 due to the support on the flange 14 of the wall of the lens, the device thus being locked in place. It can be seen how the flange 10 remains inserted in the window 12 and the tongue 8 has recovered its initial position as a result of its resting on the flange 14. These locking points will keep the assembly fastened and secured, making it impossible to extract the assembly. The position of Figure 8 is clearly seen in the perspective view of Figure 9 in which the same references are used to indicate the same components or arguments.

A gasket 16 is inserted to assure the closure between the lens 8 and the edge of the opening of the panel 1, which gasket, as seen in Figures 8 and 9, will be compressed between the edge of the opening of the panel 1 and the lens 5.

Figures 10 to 12 show successive positions between the lens 5 and the casing 3, representing the disassembly from inside between steps from the assembled position of Figures 8 and 9, in which the flange 10 is inserted in the first window 12 of the lens 5 such that the tongue 8 is bent, providing the fastening of the assembly. In the following step, shown in Figure 10, a change in the fixing occurs by stretching the casing 3 from inside, taking the flange 10 from the first window 12 to the second window 13. As a result of this change in the fixing, the flange 14 of the wall of the lens 5 is opposite to the window 11 of the tongue 8, as can be seen in Figure 12. Therefore, the tongue 8 is not in the bent position and the contact it had with the edge of the opening of the panel 1 disappears. As shown in Figure 11, only a last step will be needed in which a force is exerted from outside, as represented with the arrow of Figure 8, to extract the lens 5 from the opening of the panel 1.

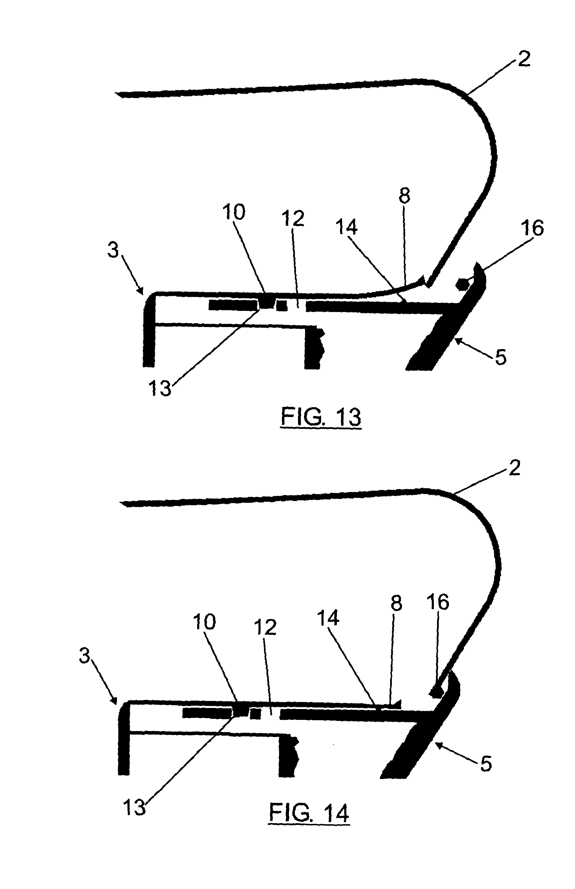

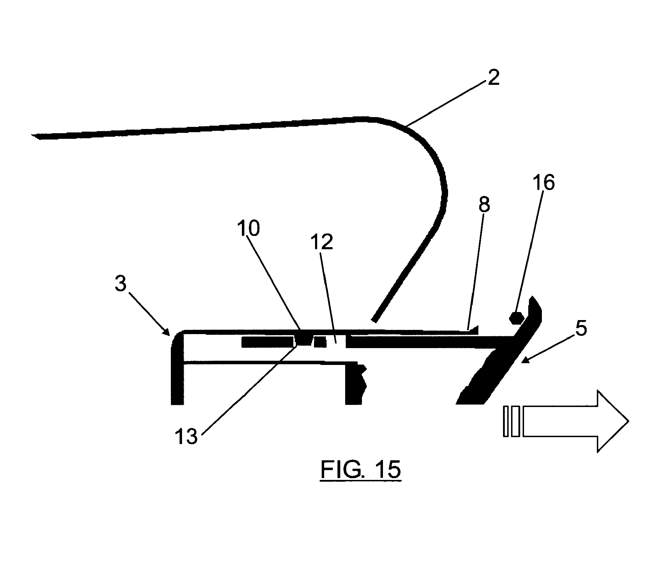

Figures 13 to 15 show successive positions between the lens 5 and the casing 3, showing the disassembly of the luminous indicator from outside from the position of Figures 8 and 9, in which the flange 10 is inserted in the first window 12 of the lens 5, such that the tongue 8 is bent outwardly due to the effect of the flange 14 of the wall of the lens, providing the fastening of the assembly. In the second step, Figure 13, a change in the fixing occurs by stretching the lens 5 from outside, the flange 10 going from the first groove 12 to the second groove 13. A small force is then exerted towards the inside of the hatch, as shown in Figure 11, such that the flange 14 of the wall of the lens 5 is opposite to the window 11 of the tongue 8, as shown in Figure 12. With flange 10 inserted in the groove 13 and flange 14 inoperative since it is positioned inside the window 11 of the tongue 8, the contact of the edge of the opening of the hatch panel 1 with the tongue 8 disappears, then allowing the lens 5 to be extracted as indicated by means of the arrow in Figure 15, in which position the indicator can be completely extracted and the gasket 16 can even be removed.

The flange 10 of the wall of the casing assures the locking against the relative movement between casing 3 and lens 5. This locking is carried out by means of the insertion of the flange 10 in one of the windows 12 or 13 of the lens 5, depending on if the assembly is to be assembled or disassembled. The position of the flange 10 in either opening will further condition whether or not the tongue 8 bends according to whether it rests against the flange 14 of the wall of the lens 5 or the window 11 of said tongue, Figure 12, is opposite to the mentioned flange.

As has been set forth, the assembly can be carried out from outside by means of a single operation, whereby attaining considerable time savings in the assembly line.

For its part, the disassembly can be carried out from outside in three operations and from inside in just two operations, always by means of applying force either towards the inside or towards the outside of the hatch, thus obtaining the change in the fixing of the flange 10 of the panel 1 in one of the windows 12 or 13 of the lens 5.

The assembly of the indicator of the invention furthermore does not require the area of the bodywork in which it is assembled to have a minimum inclination since it does not require a turn of the indicator once it is introduced.

## Claims

1. An outside luminous indicator for automotive vehicles, intended to be assembled in an opening of the bodywork panel, comprising a casing, by way of a box open at one of its bases, and a lens fixed to said casing and closing its open base, the casing housing the light source which is visible through the lens, **characterized in that** a tongue axially projects from the wall of the casing, which tongue can bend transversely and on which a wall portion of the lens internally abuts; which tongue has a flange aimed towards the wall of the lens and a window located outside the mentioned flange, close to the free edge; and which lens has in the wall portion opposite to the tongue of the casing, two windows having larger dimensions than the flange of the tongue, axially separated from one another, and a flange located outside said windows, having a smaller dimension than the window of the tongue of the wall of the casing; the windows of the lens being selectively opposite to the flange of the tongue of the casing in complete and partial coupling positions of the lens in the casing, and the flange of the lens opposite to the window of the tongue of the wall of the casing in the partial coupling position between lens and casing, whereas in the complete coupling position of the tongue of the wall of the casing it rests on the flange of the lens and is partially bent outwardly so as to function as a retaining stop against the edge of the opening of the bodywork panel.

2. An indicator according to claim 1, **characterized in that** a gasket is arranged between the edge of the opening of the bodywork panel and the lens, which gasket is retained by the edge of the tongue of the wall of the casing in the maximum coupling position between lens and casing.
